# EUROPÄISCHE PATENTSCHRIFT

(11) **EP 0 460 699 B1**
(45) Veröffentlichungstag und Bekanntmachung des Hinweises auf die Patenterteilung: **08.03.1995**
(21) Anmeldenummer: 91109361.5
(22) Anmeldetag: 07.12.1989
(51) Int. Cl.: B65H 51/22, D03D 47/36

(54) **Fadenspeicher- und -liefervorrichtung**
Yarn storage and delivery device
Dispositif d'emmagasinage et d'amenée de fil

(30) Priorität: 07.12.1988 SE 8804441; 08.12.1988 SE 8804442; 09.01.1989 SE 8900047
(43) Veröffentlichungstag der Anmeldung: 11.12.1991
(62) Teilanmeldung aus: 90900852.6
(73) Patentinhaber: IRO AB, S-523 01 Ulricehamn (SE)
(72) Erfinder: Akerlind, Bo, S-125 42 Älvsjö (SE); Hellström, Jerker, S-440 41 Nol (SE); Fredriksson, Lars-Berno, S-511 57 Kinna (SE)
(74) Vertreter: Grünecker, Kinkeldey, Stockmair & Schwanhäusser Anwaltssozietät

(56) Entgegenhaltungen:
- EP-A- 0 286 584
- EP-A- 0 327 973
- WO-A-79/00010
- US-A- 3 670 976
- US-A- 4 378 161

## Beschreibung

Die Erfindung betrifft eine Fadenspeicher- und -liefervorrichtung gemäß dem Oberbegriff des Patentanspruchs 1.

Bei einer aus EP-A-0 286 581 bekannten Fadenspeicherund -liefervorrichtung dieser Art ist die Fadenbruch-Fühleinrichtung beim abzugsseitigen Ende der Speicherfläche angeordnet und auf einen Durchgangsbereich des Fadens ausgerichtet, in dem dieser quer zu seiner Längsrichtung über den Abzugsrand der trommelförmigen Speicherfläche gleitet, nachdem er aus der letzten Windung des Fadenvorrats gelöst worden ist. Da die Durchgangsgeschwindigkeit des Fadens im Durchgangsbereich von der Eintraggeschwindigkeit in das Fach der Webmaschine abhängt, die erheblich höher sein kann als die Aufwickelgeschwindigkeit des Aufwickelorgans, ist es einfach, den Faden dort korrekt abzutasten und ein brauchbares kräftiges Nutzsignal zu erzeugen. Da bei dieser Fadenspeicher- und -liefervorrichtung ein Fadenbruch erst stromab des Fadenvorrats auf der Speicherfläche festgestellt wird, läßt sich jedoch nicht vermeiden, daß der Fadenvorrat auf der Speicherfläche bereits aufgezehrt ist. Dann ist es jedoch schwierig, die Webmaschine rasch genug abzustellen, um Gewebefehler zu vermeiden. Auch wird zum Einfädeln eines neuen Fadens bei aufgezehrtem Fadenvorrat eine relativ lange Stillstandszeit benötigt und muß der ganze Fadenvorrat erneuert werden, ehe eine Betriebsaufnahme möglich ist.

Der Erfindung liegt die Aufgabe zugrunde, eine Fadenspeicher- und -liefervorrichtung der eingangs genannten Art zu schaffen, bei der ein zulaufseitiger Fadenbruch zuverlässig und rasch feststellbar ist.

Die gestellte Aufgabe wird mit den Merkmalen des Patentanspruchs 1 gelöst.

Die auf den Auslaß oder zumindest die erste Windung des Fadenvorrats ausgerichtete opto-elektronische Fadenbruch-Fühleinrichtung erzeugt starke und eindeutige Nutzsignale aus der Anwesenheit bzw. Abwesenheit des Fadens. Bei einem zulaufseitigen Fadenbruch tritt nämlich entweder kein Faden mehr aus dem Auslaß aus oder wird keine erste Windung im Fadenvorrat mehr gebildet, was die Fadenbruch-Fühleinrichtung sofort feststellt.

Eine besonders zweckmäßige Ausführungsform geht aus Anspruch 2 hervor. Die Abbildungsoptik überwacht ausschließlich den Fühlbereich, den sie für die opto-elektronische Fadenbruch-Fühleinrichtung definiert. Sie stellt auf der Empfängerfläche eine scharfe Abbildung des Fadens dar, wobei infolge der Eingrenzung des Fühlbereiches der störende Einfluß von Fremdlicht, Verschmutzungen, Flusen oder anderen störenden Objekten minimiert wird. Mittels der Abbildungsoptik wird eine scharfe Abbildung des Fadens erzeugt, die von dem Fotoelement auch bei niedriger Durchgangsgeschwindigkeit des Fadens zu einem starken Nutzsignal verarbeitet wird, das wesentlich stärker und eindeutiger ist als ein nur aus einer Lichtintensitätsänderung resultierendes Nutzsignal. Flusen, Flusenbüschel oder Verschmutzungen im Fühlbereich führen zu Abbildungen, die von der scharfen Abbildung des Fadens unterscheidbar und ignorierbar sind. Flusen, Flusenbüschel oder Verschmutzungen vor oder hinter dem Fühlbereich werden überhaupt nicht registriert. Das starke Nutzsignal, das beispielsweise in digitaler Form erzeugt wird, ist mit geringem Verstärkungs- und Filteraufwand zu verarbeiten. Gerade bei der Abtastung des Fadens zwischen dem Auslaß des Aufwickelorgans und der ersten Windung ist die Abbildungsoptik von Vorteil, weil sich der Fühlbereich exakt und im freien Raum dort plazieren läßt, wo der Faden durchgehen muß. Bei der Abtastung der zumindest ersten Windung auf der Speicherfläche ist der Faden auf der Speicherfläche abgestützt. Der Fühlbereich kann deshalb noch enger eingegrenzt sein, weil Bewegungen des Fadens von der Speicherfläche weg praktisch nicht vorkommen.

Die Auführungsform gemäß Anspruch 3 ist vorteilhaft, weil bei einem Fadenbruch spätestens bei der nächsten Passage des Aufwickelorgans an der opto-elektronischen Fadenbruch-Fühleinrichtung das die Anwesenheit des Fadens im Fühlbereich repräsentierende Nutzsignal ausbleibt und den Fadenbruch anzeigt.

Die Ausführungsform von Anspruch 4 ist zweckmäßig, weil zur Feststellung der Anwesenheit des Fadens ein deutliches Nutzsignal dann erzeugbar ist, wenn die Fühlbereichsbreite eingegrenzt ist. Die Fühleinrichtung kann genau auf die Fadenqualität einjustiert werden, so daß Fehlsignale aufgrund von Verschmutzungen oder dgl. unterdrückbar sind.

Eine weitere, vorteilhafte Ausführungsform geht aus Anspruch 5 hervor. Durch das Überwachen mehrerer erster Fadenwindungen wird ein besonders starkes Nutzsignal erzeugt, dessen Ausbleiben einen Fadenbruch zuverlässig feststellen läßt.

Eine weitere vorteilhafte Ausführungsform geht schließlich aus Anspruch 6 hervor. Das Objektiv stellt die scharfe Abbildung des Fadens auf der Empfängerfläche her und schafft die Voraussetzung für die Stärke und Klarheit des Nutzsignals. Die Abbildungsschärfe ist so gewählt, daß die Abbildungsgrenzen feststellbar sind. Dies bedeutet, daß die Randschärfe der Abbildung auch schwächer oder stärker als die Schärfe sein kann, die das menschliche Auge zum Erkennen benötigen würde. Mit wenigstens einer Sammellinse läßt sich die Abbildung verkleinern oder vergrößern. Die Umgebung des Fadens wird ignoriert. Eine eventuelle Verzerrtendenz der Sammellinse im Randbereich wird kompensiert, indem nur ein Kernbereich der Sammellinse genutzt wird. Die Blende erhöht die Sicherheit gegen Abbildungsfehler. Das Objektiv ist leistungsfähig und läßt es zu, die Fühleinrichtung in beträchtlichem Abstand vom Fühlbereich anzuordnen, um den Fadendurchgang nicht zu behindern.

Anhand der Zeichnung werden Ausführungsformen des Erfindungsgegenstandes erläutert. Es zeigen:
- Fig. 1: eine schematische Seitenansicht einer Fadenspeicher- und -liefervorrichtung mit Anwendungsfällen von optoelektronischen Fühleinrichtungen,
- Fig. 2: einen vergrößerten Schnitt einer Fühleinrichtung,
- Fig. 3: eine schematische Darstellung von Komponenten einer Fühleinrichtung mit einem Bildwandler,
- Fig. 4A,4B: zwei Arbeitsphasen der Fühleinrichtung von Fig. 2,
- Fig. 5: vier verschiedene Möglichkeiten a-d zur Ausgestaltung des Bildwandlers der Fühleinrichtung,
- Fig. 6: vier der Fig. 5 zugehörige Schemata zur Verdeutlichung der Funktion, und
- Fig. 7: schematisch eine andere Ausführungsform einer Fühleinrichtung.

Eine Fadenspeicher- und -liefervorrichtung 1 ist mit drei verschiedenen Fühleinrichtungen F für verschiedene Funktionen bestückt. Die Vorrichtung 1 enthält ein von einem Antrieb 2 getriebenes Aufwickelorgan 4, das einen durch den Antrieb 2 zulaufenden Faden 7 in Windungen zu einem Fadenvorrat 8 auf eine Speicherfläche 3 aufwickelt. Daraus wird der Faden 7 überkopf unter einem Ring 5 (Ringspalt 9) in Umfangsrichtung umlaufend und durch eine Fadenöse 6 abgezogen. Eine im Ring 5 angeordnete optoelektronische Fühleinrichtung F stellt den Durchgang des Fadens 7 bei jedem Umlauf fest und erzeugt Nutzsignale, die, beispielsweise, zum Berechnen der Länge des abgezogenen Fadens, seiner Geschwindigkeit oder zum Feststellen eines Fadenbruchs verarbeitet werden .

Die dem Aufwickelorgan 4 zugeordnete optoelektronische Fühleinrichtung F stellt berührungslos den ordnungsgemäßen Durchgang des Fadens 7 und die Geschwindigkeit des Aufwickelorgans 4 bzw. des Antriebs 2 fest. Auch wird ein Fadenbruch festgestellt, wenn das aus dem Durchgang des Fadens zu einem bestimmten Zeitpunkt erwartete Nutzsignal ausbleibt. Diese Fühleinrichtung überwacht entweder den aus dem Wickelorgan 4 austretenden Faden 7 bei seinen Passagen (auf einen Fadenbruch stromauf oder /und auf die Wickelgeschwindigkeit oder die Windungszahl) oder den Bereich zumindest der ersten Fadenwindung im Vorrat 8 (auf einen Fadenbruch stromauf). In beiden Fällen dient die Fühleinrichtung auch zur Feststellung der linearen Fadenbewegung.

Die dritte Fühleinrichtung F ist außerhalb der Speicherfläche 3 an einer Halterung stationär angebracht und auf den Fadenvorrat 8 ausgerichtet. Sie übewacht einen balkenförmigen Fühlbereich, in dem die Windungen als langgestrecktes Objekt, gegebenenfalls unterbrochen durch Zwischenräume, vorliegen. Lichtquellen 10 leuchten den Fühlbereich aus, damit die Fühleinrichtung F mittels eines Objektivs mit Sammellinse 11 eine Abbildung des Objekts auf einer sensitiven Empfängerfläche 12 herstellt. Ein Bildwandler 13 erzeugt unterschiedliche Nutzsignale aus der Abbildung, wie später erläutert wird. Diese drei Fünleinrichtungen F sind eine Auswahl aus einer Vielzahl von Möglichkeiten des Einsatzes solcher Fühleinrichtungen. Grundsätzlich sind diese Fühleinrichtungen zur Nutzsignalerzeugung unter genauerem Abtasten eines oder mehrerer Fäden oder Fadenteile brauchbar, und zwar für Textilmaschinen wie Webmaschinen, für diesen vorgesetzte Einrichtungen oder auch in der Textilmaschine selbst.

Fig. 2 ist ein Schnitt der Fühleinrichtung F im Ring 5. Als Lichtquelle L dient eine Fotodiode 10, die durch einen schrägen Kanal 14 in den Ringspalt 9 leuchtet, durch den der abgezogene Faden 7 quer hindurchgeht. Einund Ausfallswinkel sind jeweils ca. 20^{o}. Auf den beleuchteten Faden 7 ist ein Fotoelement 15, z.B. eine Fotodiode oder ein Fototransistor, mit einer Empfängerfläche 16 ausgerichtet, die am Ende eines als Blende ausgebildeten, ausgekleideten Rohres 7 liegt, an dessen anderem Ende eine Abbildungsoptik 18, z.B. eine Sammellinse, angeordnet ist. Die optische Achse 20 der Sammellinse ist auf die Empfängerfläche 16 und den Faden ausgerichtet. An der anderen Seite der Abbildungsoptik 18 ist als weitere Blende 19 ein, vorzugsweise lichtabsorbierend ausgekleideter Kanal, vorgesehen. Die Ringspaltweite W beträgt z.B. 5mm. Darauf ist die Tiefenschärfe der Abbildungsoptik 18 ausgelegt, die den außerdem in der Breite, z.B. auf die Breite des Fadens 7, begrenzten Fühlbereich betrachtet. Der Fühlbereich ist also optisch sowohl in der Tiefe als auch zumindest in der Breite exakt begrenzt.

Tritt der Faden 7 in den Fühlbereich ein, so stellt die Abbildungsoptik 18 vom Faden eine scharfe Abbildung auf der Empfängerfläche 16 her, die vom Fotoelement 15 zur Erzeugung eines Nutzsignals ausgewertet wird.

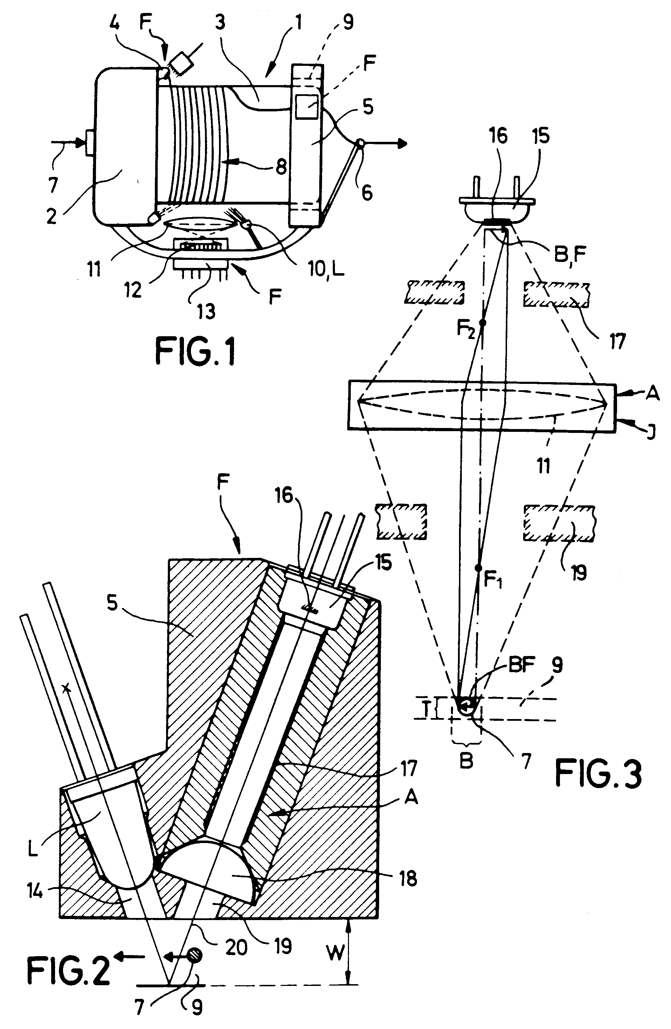

Gemäß Fig. 3 stellt ein die Abbildungsoptik A darstellendes Objektiv J die Abbildung BF' des Fadens 7, dargestellt durch einen das Objekt repäsentierenden Pfeil BF, auf der Empfängerfläche 16 her. Die objekt-und bildseitigen Brennpunkte F1, F2 des Objektives J, das hier wenigstens eine bikonvexe Sammellinse 11 enthält, liegen jeweils zwischen dem Objektiv J und der Empfängerfläche 16 und zwischen dem Objektiv J und dem Ringspalt 9. Das Objekt BF wird spiegelverkehrt und mit einer einstellbaren Vergrößerung oder Verkleinerung auf der Empfängerfläche 16 abgebildet und vom Fotoelement 15 zur Abgabe des Nutzsignals ausgewertet. Der Fühlbereich hat eine Breite B und eine Tiefe T, die höchstens der Tiefe des Ringspalts 9 entspricht. Die Blenden 19, 17 verbessern die Schärfe der Abbildung BF' und stellen die Tiefenschärfe im Fühlbereich ein. Die Blenden 19, 17 kompensieren Abbildungsfehler durch ggfs. verzerrende Randbereiche der Sammellinse 11.

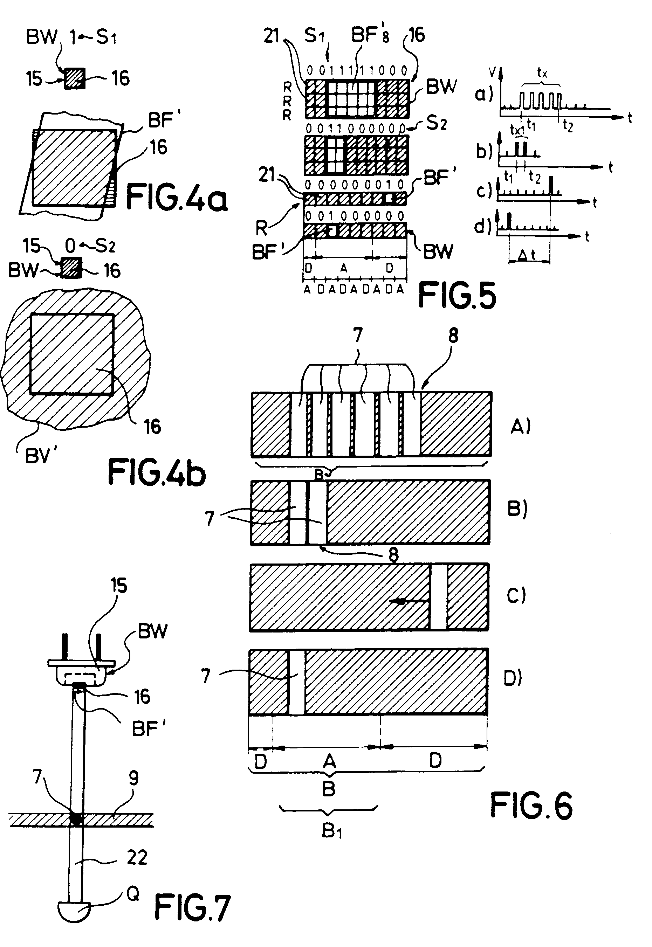

Gemäß Fig. 4A deckt die scharfe Abbildung BF' nahezu die gesamte Empfängerfläche 16 ab. Nur die horizontal schraffierten Ecken liegen außerhalb der Ränder der Abbildung BF'. Das Fotoelement 15 ist als Bildwandler BW konzipiert oder mit einem Bildwandler BW kombiniert, der die Abbildung innerhalb ihrer Grenzen auswertet und ein Nutzsignal S1 erzeugt, z.B eine digitale 1. Das Nutzsignal 1 wird nur erzeugt, wenn der Bildwandler BW eine bestimmte Lichtintensität der Abbildung innerhalb der scharfen Grenzen feststellt, was durch die dichte Schraffierung des kleinen die Empfängerfläche 16 andeutenden Kästchens oberhalb von Fig. 4A angedeutet wird.

Tritt hingegen gemäß Fig. 4B ein Flusenbüschel in den Fühlbereich, dann ist dessen Abbildung BV' zwar größer als die Abbildung BF'. Wegen der größeren Lichtdurchlässigkeit des Flusenbüschels hat die Abbildung BV' auf der Empfängerfläche 16 eine geringere Helligkeit. Der Bildwandler stellt die geringere Helligkeit fest und erzeugt kein Nutzsignal, sondern ein Grundsignal S2 oder ein anderes Signal, z.B. eine digitale 0.

Der Bildwandler BW kann (s. Fig. 5) aus mehreren Fotoelementen in Reihen- oder Matrixform zusammengesetzt sein, um die Abbildung möglichst präzise auszuwerten. Gemäß Fig. 5 (a,b) ist die Empfängerfläche 16, die dem Bildwandler BW zugehört, als flächige Matrix (hier drei Reihen R1, R2, R3) einzelner abbildungssensitiver Lichtpunktelemente oder Pixel 21 ausgebildet, die an eine sequentiell (z.B. von links nach rechts) abtastende Steuerschaltung (nicht dargestellt) angeschlossen ist. In Fig. 5, a ist die Abbildung BF'₈ des Fadenvorrats 8 ein langgestrecktes Rechteck, zu dessen beiden Schmalseiten nicht beleuchtete Pixel vorliegen. Im zugehörigen, in Fig. 6, A, gezeigten Fühlbereich mit der Breite B liegen fünf Windungen des Fadens 7, zwischen denen schmale Abstände herrschen. Daraus ist die Abbildung BF'₈ hergestellt. Der Bildwandler BW wandelt die Abbildung BF'₈ in digitalisierter Form bei jeder Abtastsequenz in eine rechts neben Fig. 5, a, gezeigte Signalkette um (Diagramm Spannung über Zeit). Es ergeben sich fünf deutliche Signale in der Signalkette, vor und hinter denen keine deutlichen Signale vorliegen. Der Zeitpunkt t1 repräsentiert den Beginn des Fadenvorrats 8 in Abtastrichtung, die Zeitspanne tx entspricht der Größe des Fadenvorrates bzw. der Anzahl der Windungen, der Zeitpunkt t2 repräsentiert das Ende des Fadenvorrats. Diese Signale t1, tx, t2 sind wie auch die absoluten Signalwerte in der Signalkette repräsentativ für die Größe und Lage des Vorrats 8 im Fühlbereich.

In der nächsten oder in einer der nächsten Abtastsequenzen ist der Fadenvorrat 8, Fig. 6, B, auf zwei Windungen verkleinert, und zwar von der rechten (Abzugs-)Seite. Gemäß Fig. 5b ist die Abbildung BF'₈ entsprechend kleiner. Es werden in der Matrix des Bildwandlers BW weniger Pixel von der Abbildung getroffen. Die im Diagramm rechts neben Fig. 5, b, gezeigte Signalkette enthält nur mehr zwei deutliche Signale. Da der Zeitpunkt t2 und die Zeitspanne tx1 gegenüber den vorher ermittelten t2, tx differieren, können durch Vergleich (z.B. in einem Mikroprozessor) sowohl die Verringerung der Größe der Abbildung als auch die Richtung der Abnahme ermittelt werden. In Abhängigkeit von dem Ergebnis kann das Aufwickelorgan 4 (Fig. 1) den Vorrat 8 wieder vergrößern. Wächst der Fadenvorrat 8 über eine bestimmte Größe, was durch die fortlaufende Abtastung festgestellt wird, wird der Antrieb 2 (Fig. 1) wieder abgestellt. In der Regel wird dann so verfahren, daß mittels der Abtastung ein kontinuierlicher Antrieb für das Fadenaufwickelorgan 4 eingestellt wird. Eine nicht mehr kompensierbare Verkleinerung oder Vergrößerung der Abbildung BF'₈ während der Abtastung bedeutet eine Störung, z.B. einen Fadenbruch, was zu einer Störungsanzeige oder zu einem Abschaltsignal verarbeitet wird.

Gemäß Fig. 5 c und d und Fig. 6, C, D, wird mittels einer Reihenmatrix R aus Lichtpunktelementen 21 die Geschwindigkeit und die Bewegungsrichtung des den Fühlbereich mit der Breite B quer durchsetzenden Fadens 7 (im Fühlbereich gemäß Fig. 6, C und D) in entsprechende Nutzsignale (Zeitabstand dt und digitale Einsen) gewandelt, aus denen die Fadengeschwindigkeit oder die Länge des abgezogenen bzw. aufgewickelten Fadens ermittelt wird (in Fig. 1 bei der Fühleinrichtung F beim Aufwickelorgan 4). Zusätzlich können die Nutzsignale, die mit einem Mikroprozessor verarbeitet werden, bei zu starken Unregelmäßigkeiten oder bei Ausbleiben zum Erzeugen eines Störungsanzeige- oder Abschaltssignals benutzt werden.

Auch die Überwachung des Fadenvorrates 8 könnte mit der Reihe R der Lichtpunktelemente 21 (Fig. 5c und d) durchgeführt werden. Eine flächige Matrix (Fig. 5a und b) hat allerdings den Vorteil besonders deutlicher und starker Signale und vermeidet Probleme, die sich aus Problemen der ordnungsgemäßen Ausrichtung der optischen Achse des Objektivs J auf die Empfängerfläche 16 bzw. den Bildwandler BW ergeben könnten.

Gemäß Fig. 5, c und d, führt die Abbildung BF' des Fadens 7 bei der Bewegung in aufeinanderfolgenden Abtastzyklen zu einer Signalkette, in der jeweils ein einziges, das Vorliegen der Abbildung BF' repräsentierendes Signal zu unterschiedlichen Zeitpunkten auftritt. Der Zeitunterschied dt wird zur Ermittlung der Bewegungsgeschwindigkeit und der Bewegungsrichtung ausgewertet. Dabei wird auch das ordnungsgemäße Vorhandensein des Fadens 7 festgestellt, weil Flusen oder andere Fremdkörper leicht erkennbare und deshalb unterscheidbare Signale bewirken.

In Fig. 5, d, ist angedeutet, daß in der Reihe R der Bildpunktelemente 21 nur ein mit A begrenzter Bereich aktiv ist, während die mit D angedeuteten Bereiche deaktiviert sind. Auf diese Weise ist eine Eingrenzung der Abtastung eingestellt. Dies läßt sich auch bei der flächigen Matrix (Fig. 5, a, b) vornehmen. Zur Veränderung der Auflösung der Abtastung könnten in der Reihen- oder der flächigen Matrix aufeinanderfolgend aktive und deaktivierte Lichtpunktelemente 21 eingestellt werden, was zweckmäßigerweise über eine Eingrenzvorrichtung in der Steuerschaltung der Matrix geschieht. Dies bewirkt, z.B., daß in Fig. 6, D, der Fühlbereich nur die Breite B1 hätte, weil die Bereiche D ignoriert werden. Eine Eingrenzung des Fühlbereiches kann aber auch durch die Einstellung der Blenden 17, 19 oder das Objektiv J Abbildungsoptik 18 vorgenommen werden.

In Fig. 7 wird durch den Ringspalt 9 ein Bündel kohärenten Lichtes 22 von einer Laserlichtquelle Q auf die Empfängerfläche 16 gerichtet. Die Abbildung BF' des Fadens 7 wird aufgrund des kohärenten Lichts 22 scharf genug, so daß der Bildwandler BW, auch in Form einer flächigen oder reihenförmigen Matrix zuverlässig auswertet.

Vergleich der Funktionen einer Fühleinrichtung gemäß den Fig. 2 und 3 und einer Fühleinrichtung mit einer Sammellinse ohne exakt begrenzten Fühlbereich:
Voraussetzungen: Faden mit einem Durchmesser von 0,4mm und einer Lichtdämpfung von 30%. Flusenbüschel mit 4mm Durchmesser und einer Lichtdämpfung von 6%. Die Größe der Empfängerfläche 16 ist auf den Durchmesser des Fadens 7 abgestimmt, d.h. die von der Abbildungsoptik 18 hergestellte Abbildung bedeckt die Empfängerfläche 16. Die bekannte Fühleinrichtung überwacht mit der Sammellinse einen Zylinder mit einem Durchmesser von 6mm.

Bei der bekannten Fühleinrichtung hat der Fühlbereich somit eine Fläche von ca. 27mm², wobei die Fläche, die der Faden innerhalb des Fühlbereichs einnimmt, ca. 2,4mm² beträgt. Daraus ergibt sich für den Faden eine Modulation von ca. 2,6%. Das Flusenbüschel repräsentiert eine Fläche von ca. 12mm² bei einer Modulation von ebenfalls 2,6%. Daraus geht hervor, daß das Fadenbüschel die gleiche Lichtmodulation erbringt wie der Faden, obwohl seine Lichtdämpfung nur 1/5 der Lichtdämpfung des Fadens beträgt. Die bekannte Fühleinrichtung erzeugt beim Flusenbüschel im Fühlbereich ein Fehlsignal.

Bei der neuen Fühleinrichtung ist der Fühlbereich auf 0,13mm² eingegrenzt, wobei die Fläche des Fadens im Fühlbereich ebenfalls 0,13mm² beträgt, d.h., der Faden füllt den Fühlbereich aus, seine Abbildung auf der Empfängerfläche bedeckt diese. Die Lichtmodulation des Fadens ist 30%. Ein im Fühlbereich vorliegendes Flusenbüschel wird auf 0,13mm² abgetastet, was zu einer Lichtmodulation von nur 6% fuhrt. Das Fotoelement ist aufgrund des Faktors 5 zwischen den abgetasteten Objekten in der Lage, zwischen dem Faden und dem Flusenbüschel zu unterscheiden und ein Fehlsignal zu unterdrücken.

## Patentansprüche

1. Fadenspeicher- und -liefervorrichtung (1) mit einer trommelförmigen stationären Speicherfläche (3), auf der ein aus aufeinanderfolgenden Windungen bestehender Fadenvorrat (8) durch Aufwickeln herstellbar und von der der Faden (7) überkopf aus dem Fadenvorrat (8) abziehbar ist, mit einem mit einem Antrieb (2) verbundenen zu einer Umlaufbewegung antreibbaren und einen oberhalb der Speicherfläche (8) liegenden Auslaß für den Faden (7) aufweisenden Aufwickelorgan (4) für den zulaufenden Faden (7), der sich vom Auslaß im freien Raum zur Speicherfläche und in die erste Windung auf der Speicherfläche (8) erstreckt, und mit einer stationär angeordneten und auf einen Durchgangsbereich des Fadens ausgerichteten, opto-elektronischen Fadenbruch-Fühleinrichtung (F), **dadurch gekennzeichnet**, daß die Fadenbruch-Fühleinrichtung (F) nahe des Durchgangswegs des Auslasses des Aufwickelorgans (4) angeordnet und dort entweder auf den aus dem Auslaß austretenden Faden (7) oder auf zumindest die erste, dem Auslaß benachbarte Fadenwindung auf der Speicherfläche (8) ausgerichtet ist.

2. Fadenspeicher- und -liefervorrichtung nach Anspruch 1, **dadurch gekennzeichnet**, daß die opto-elektronische Fadenbruch-Fühleinrichtung (F) eine Lichtquelle (L) und ein Fotoelement (15) mit einer Empfängerfläche (16) und ein dazwischen angeordnetes optisches System aufweist, das einen Fühlbereich für den sich quer zu einer Längsrichtung bewegenden Faden (7) definiert und eine Abbildungsoptik (A) mit einer eine vorbestimmte Tiefe (T) des Fühlbereichs begrenzenden Tiefenschärfe und einem zumindest in der Breite (B) eingeschränkten Betrachtungsbereich aufweist, und daß die Empfängerfläche (16) im Faden-Scharfabbildungsbereich der Abbildungsoptik (A) angeordnet ist.

3. Fadenspeicher- und -liefervorrichtung nach Anspruch 1, **dadurch gekennzeichnet**, daß mit der opto-elektronischen Fadenbruch-Fühleinrichtung (F) ein die Anwesenheit des Fadens (7) im Fühlbereich repräsentierendes Nutzsignal erzeugbar ist, und daß ein Fadenbruch anhand des Nutzsignals feststellbar ist, vorzugsweise bei Ausbleiben des Nutzsignals zu einem vorbestimmten Zeitpunkt.

4. Fadenspeicher- und -liefervorrichtung nach wenigstens einem der Ansprüche 1 bis 3, **dadurch gekennzeichnet**, daß der Fühlbereich in der Breite (B) quer zur Strahlrichtung der Lichtquelle (L) annähernd auf die Breite des Fadens (7) begrenzt ist.

5. Fadenspeicher- und -liefervorrichtung nach den Ansprüchen 1 und 2, **dadurch gekennzeichnet**, daß der Fühlbereich annähernd auf die Breite einer vorbestimmten Anzahl nebeneinanderliegender Fadenwindungen, gegebenenfalls getrennt durch Zwischenabstände, begrenzt ist.

6. Fadenspeicher- und -liefervorrichtung nach wenigstens einem der Ansprüche 1 bis 5, **dadurch gekennzeichnet**, daß die Abbildungsoptik (A) ein Objektiv (J), vorzugsweise mit wenigstens einer Sammellinse (11, 18) oder einer Linsenkombination aus mehreren Linsen mit wenigstens einer Sammellinse (11) enthält, und daß im Objektiv wenigstens eine Blende (17, 19) vorgesehen ist.

## Claims

1. Thread storage and delivery device (1) with a drum-shaped stationary storage surface (3) on which a thread reserve (8) comprising consecutive windings can be produced by winding and from which the thread (7) can be unwound overhead from the thread reserve (8), with a winding-on member (4) for the incoming thread (7) linked to a drive (2) allowing it to be driven in a rotating movement and having an exit located above the storage surface (8) for the thread (7), which extends from the exit in the free space to the storage surface and into the first winding on the storage surface (8), and having an opto-electronic thread breakage sensor device (F) mounted in a fixed position and directed towards the area through which the thread passes, **characterized in that** the thread breakage sensor device (F) is mounted in the vicinity of the passage through the exit of the winding-on member (4) and is there directed either towards the thread (7) emerging from the exit or towards at least the first thread winding adjacent to the exit on the storage surface (8).

2. Thread storage and delivery device in accordance with claim 1, **characterized in that** the opto-electronic thread breakage sensor device (F) comprises a light source (L) and a photo-element (15) with a receptor surface (16) and an optical system arranged between them which defines a sensor range for the thread (7) in motion transverse to a longitudinal direction and comprises imaging optics (A) with a depth of field delimiting a pre-defined depth (T) of the sensor range and with an observation range restricted at least in width (B), and in that the receptor surface (16) is located in the in-focus range of the thread in the imaging optics (A).

3. Thread storage and delivery device in accordance with claim 1, **characterized in that** a signal representing the presence of the thread (7) in the sensor range can be generated by the opto-electronic thread breakage sensor device (F) and in that thread breakage can be detected from this signal, preferably by the absence of the signal at a pre-defined time.

4. Thread storage and delivery device in accordance with at least one of the claims 1 to 3, **characterized in that** the sensor range is restricted in its width (B) transverse to the direction of the beam from the light source (L) approximately to the width of the thread (7).

5. Thread storage and delivery device in accordance with claims 1 and 2, **characterized in that** the sensor range is restricted approximately to the width of a specified number of adjacent thread windings, possibly separated by intermediate spaces.

6. Thread storage and delivery device in accordance with at least one of the claims 1 to 5, **characterized in that** the imaging optics (A) includes a lens (J), preferably with at least one converging lens (11, 18) or a lens combination of several lenses with at least one converging lens (11), and in that at least one aperture plate (17, 19) is provided in the lens.

## Revendications

1. Dispositif d'emmagasinage et d'amenée de fil (1) comprenant : une surface d'accumulation fixe (3) en forme de tambour sur laquelle peut se former par enroulement une réserve de fil (8) composée de spires successives et à partir de laquelle le fil (7) peut se dévider de la réserve de fil (8) à la défilée ; un organe d'enroulement (4) agissant sur le fil (7) arrivant, qui est accouplé à un entraînement (2), peut être entrainé en un mouvement de rotation, et présente une sortie placée au-dessus de la surface d'accumulation (8), pour le fil (7), lequel s'étend à l'air libre de la sortie jusqu'à la surface d'accumulation et jusqu'à la première spire formée sur la surface d'accumulation (8) ; et un dispositif opto-électronique (F) de détection des ruptures de fil, monté en position fixe et pointé sur une zone de passage du fil, caractérisé en ce que le dispositif (F) de détection des ruptures de fil est disposé à proximité de la voie de passage de la sortie de l'organe d'enroulement (4) et, là, est pointé, soit sur le fil (7) qui sort par la sortie, soit sur au moins la première spire de fil, adjacente à la sortie, enroulée sur la surface d'accumulation (8).

2. Dispositif d'emmagasinage et d'amenée de filselon la revendication 1, caractérisé en ce que le dispositif optoélectronique (F) de détection des ruptures de fil comprend une source lumineuse (L) et un élément photo-électrique (15) possédant une surface réceptrice (16), entre lesqueles est interposé un système optique, lequel définit une zone de détection pour le fil (7) mobile transversalement à une direction longitudinale et comprend une optique (A) de formation d'image, cette optique possédant une profondeur de champ qui délimite une profondeur prédéterminée (T) de la zone de détection et une zone d'observation qui est limitée, au moins dans sa largeur (B), et en ce que la surface réceptrice (16) est disposée dans la zone de l'optique (A) de formation d'image dans laquelle il se forme une image nette du fil.

3. Dispositif d'emmagasinage et d'amenée de fil selon la revendication 1, caractérisé en ce qu'au moyen du dispositif opto-électronique (F) de détection des ruptures de fil, on peut produire un signal utile représentant la présence du fil (7) dans la zone de détection et en ce qu'une rupture de fil peut être détectée à l'aide du signal utile, de préférence par l'absence du signal utile à un instant prédéterminé.

4. Dispositif d'emmagasinage et d'amenée de fil selon au moins une des revendications 1 à 3, caractérisé en ce que, dans sa largeur (B), mesurée transversalement à la direction du rayonnement de la source lumineuse (L), la zone de détection est limitée approximativement à la largeur du fil (7).

5. Dispositif d'emmagasinage et d'amenée de fil selon les revendications 1 et 2, caractérisé en ce que la zone de détection est limitée approximativement à la largeur d'un nombre prédéterminé de spires de fil juxtaposées, éventuellement séparées par des espaces intercalaires.

6. Dispositif accumulateur et débiteur de fil selon au moins une des revendications 1 à 5, caractérisé en ce que l'optique (A) de formation d'image comprend un objectif (J), comportant de préférence au moins une lentille convergente (11, 18) ou une combinaison de lentilles formée de plusieurs lentilles et comportant au moins une lentille convergente (11), et en ce qu'au moins un diaphragme (17,19) est prévu dans l'objectif.
